# EUROPEAN PATENT SPECIFICATION

(11) **EP 2 100 298 B1**
(45) Date of publication and mention of the grant of the patent: **18.05.2011**
(21) Application number: 07793626.8
(22) Date of filing: 23.08.2007
(51) Int. Cl.: G11B 7/08

(54) **OPTICAL PICKUP ACTUATOR**
OPTISCHES PICKUP-STELLGLIED
ACTIONNEUR DE DÉTECTION OPTIQUE

(30) Priority: 20.12.2006 KR 20060130834
(43) Date of publication of application: 16.09.2009
(73) Proprietor: Samsung Electronics Co., Ltd., Suwon-si, Gyeonggi-do 442-742 (KR)
(72) Inventor: LEE, Jin-Won, Seongnam-si Gyeonggi-do 463-743 (KR); LEE, Yong-Hoon, Suwon-si Gyeonggi-do 443-745 (KR)
(74) Representative: Sherrard-Smith, Hugh
(86) International application number: PCT/KR2007/004023
(87) International publication number: WO 2008/075825

(56) References cited:
- EP-A- 1 369 854
- EP-A- 1 522 997
- DE-A1- 4 239 980
- JP-A- 2003 272 201
- JP-A- 2006 277 795
- KR-A- 20020 006 828
- US-A1- 2002 021 651
- US-A1- 2003 128 443
- US-A1- 2003 234 900
- US-A1- 2004 148 620
- US-A1- 2004 268 373
- US-A1- 2005 018 553
- US-A1- 2005 078 570
- US-A1- 2006 143 640
- US-B1- 6 181 670

## Description

### Technical Field

Aspects of the present invention relate to an optical pickup actuator and, more particularly, to an optical pickup actuator driving in four axes.

### Background Art

Optical recording and/or reproducing apparatuses include an optical pickup actuator to control a position of an objective lens so that a focusing of light is properly set on a desired track of a recording surface of a disk. Current representative optical media include CDs. DVDs, Blu-ray disks (BDs), or the like. The distances between the surface of the disk and a recording surface are different for each of these optical media. Accordingly, there is a need to develop an optical pickup actuator able to accommodate several different types of optical media. In addition, a conventional optical pickup actuator driving in two or three axes is difficult to actively correspond to a tilt of the disk. Since next generation optical media (e.g, BDs or the like) are sensitive to the tilt of a disk. there are limits in handling the tilt of a disk by precisely assembling optical media during a manufacturing process. Accordingly, an optical pickup actuator is required that can perform radial tilt driving and tangential tilt driving as well as focus driving and track driving.

Japanese Patent Laid-Open Publication No. 2001-110075 discloses an optical pickup actuator that can perform tangential tilt driving. According to this disclosure, a printed circuit board (PCB), to which a suspension wire is connected, is not attached to a holder and is supported by a plate spring. The holder functions as a center of rotation in a tangential direction. The center of rotation of this structure is the holder, not the objective lens. The objective lens is offset in a focus direction during tangential driving.

Japanese Patent Laid-Open Publication No. 2001-331957 discloses an optical pickup actuator that also performs tangential tilt driving. In this optical pickup actuator, a support point is placed on a centerline of a movement of a blade, and a piezo actuator and a displacement expansion member are mounted on the blade. According to this structure, excessive offset does not occur in a focus direction during tangential driving; however, the piezo actuator and the displacement expansion member are mounted on the blade. The blade's weight is thus increased, decreasing a high frequency driving property. US 2002/0021651 reflecting the preamble of claim 1 discloses an optical pickup actuator providing focusing, tracking and tilting control.

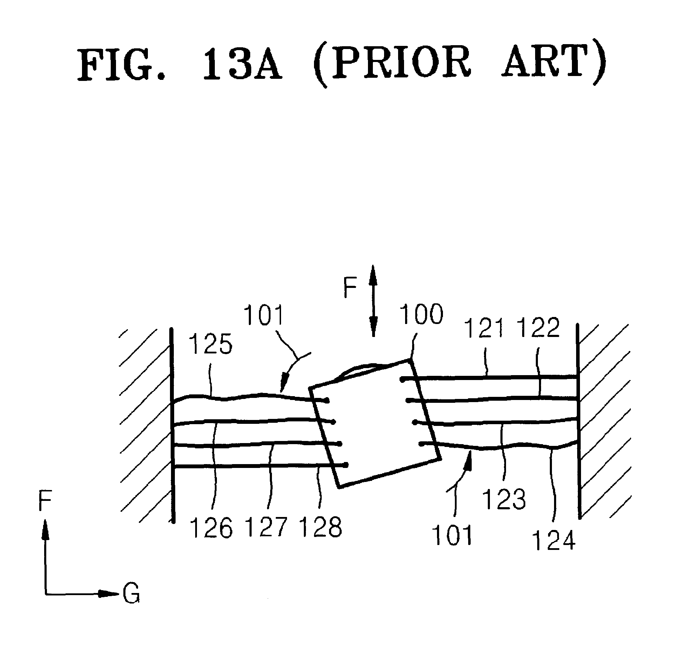

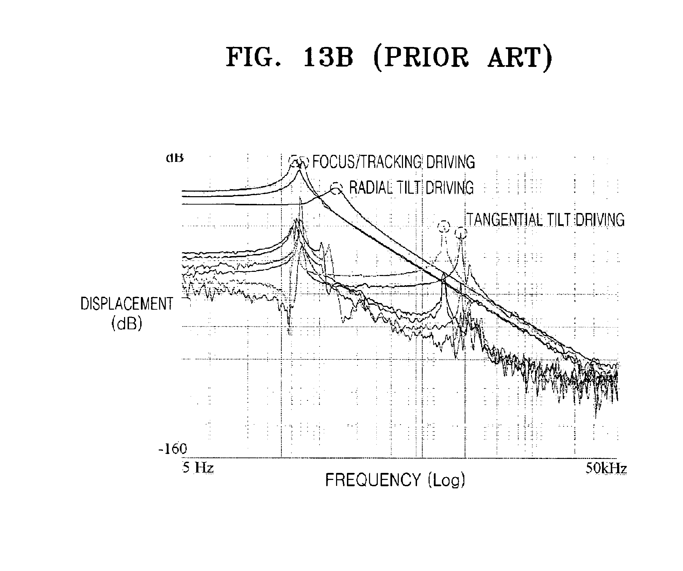

Referring to FIG. 13A, a plurality of suspension wires 121 - 128 are arranged in a focus direction F. When a blade 100 operates during tangential driving as marked with arrow 101, the suspension wires 123, 124, 125 and 126 become loose since tension occurs in the suspension wires 121, 122, 127 and 128. Accordingly, an unstable nonlinear driving property arises. In addition, referring to the graph of FIG. 13B, a first resonance frequency during tangential tilt driving is much higher than that occurring during focus driving, track driving, or radial tilt driving. This means that the stiffness of the wires during tangential tilt driving is very high. The first resonance frequency during tangential tilt driving is several kHz in a conventional actuator. The rotary inertia during tangential tilt driving is similar to that during radial tilt driving, and a first resonance frequency during radial tilt driving is several hundreds of Hz. In order to obtain a displacement having an equivalent level as during radial tilt driving, an electromagnetic force generating a rotary moment of several hundreds of times of that during radial tilt driving is required during tangential tilt driving.

### Disclosure of Invention

### Technical Problem

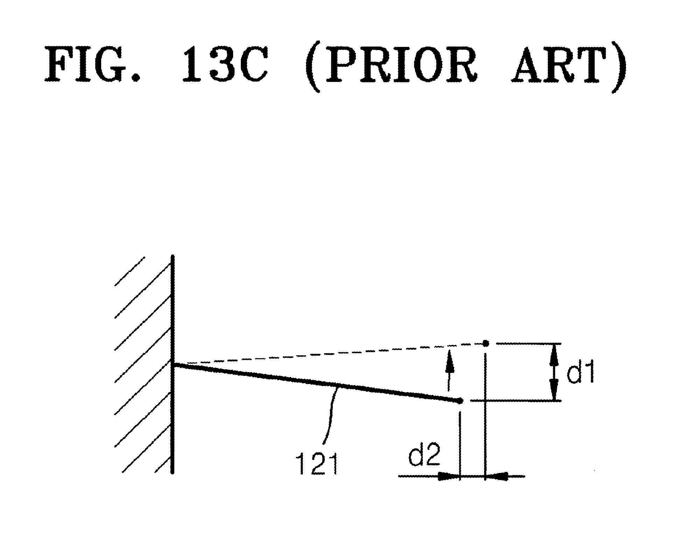

Referring to FIG. 13C, when the suspension wire 121 is arranged in a focus direction F, a maximum driving distance of the blade 100 in the focus direction F is restricted. In order to generate a displacement d1 in the focus direction F, a displacement d2 should be generated in a direction perpendicular to the focus direction F. The displacement d2 means the suspension wire 121 experiences tension in a longitudinal direction. However, since the stiffness of the suspension wire 121 in a longitudinal direction is very great, the displacement d1 in the focus direction F, which can be used substantially, is very restricted. This restriction similarly applies to the displacement in the tracking direction and during tilt driving.

### Technical Solution

Aspects of the present invention provide an optical pickup actuator performing stable four axes driving.

Aspects of the present invention also provide the optical pickup actuator able to accommodate a variety of optical media.

According to an aspect of the present invention, an optical pickup actuator is provided, including a blade, on which an objective lens is mounted, arranged so as to flexibly move by a plurality of suspension wires; magnetic members facing each other in a tangential direction, wherein the blade is disposed between the magnetic members; first coils arranged in pairs on two sides of the blade in the tangential direction to drive the blade in a focus direction and in a radial tilt direction; a pair of second coils arranged on two sides of the blade in the tangential direction to drive the blade in a track direction; and a pair of third coils arranged on two sides of the blade in a tracking direction to drive the blade in a tangential tilt direction; wherein the optical pickup actuator is driven in four axes.

According to another aspect of the invention, each of the second coils are arranged between the first coils.

According to another aspect of the invention, the magnetic member includes a first pole and a second pole separated by a first boundary line dividing the second coils in the tracking direction, wherein the first and second poles have different polarities; a third pole facing the first pole, disposed between a second boundary line dividing the first coils in a focus direction and a third boundary line between the first and second coils, and having a polarity different from the polarity of the first pole; and fourth pole arranged to be symmetrical with the third pole and facing the second pole, and having a polarity different from the polarity of the second pole.

According to another aspect of the invention, the optical pickup actuator may further include an inner yoke going through the third coils.

According to another aspect of the invention, the optical pickup actuator may further include a plurality of external yokes facing each other, wherein the magnetic members are arranged between the external yokes.

According to another aspect of the invention, the plurality of the suspension wires may be arranged in a tracking direction.

According to another aspect of the invention, there is provided an optical pickup actuator to be driven in a focus direction, a tracking direction, a radial tilt direction, and a tangential tilt direction, the optical pickup actuator including a blade, on which an objective lens is mounted; and a plurality of suspension wires coupled to the blade and arranged in the tracking direction so as to move flexibly.

According to another aspect of the invention, the plurality of suspension wires may be symmetrically arranged in the tangential direction around the objective lens.

According to another aspect of the invention, the plurality of suspension wires may be arranged on one side of the objective lens.

According to another aspect of the invention, the plurality of suspension wires may include a first group arranged in the tangential direction on one side of the objective lens, and a second group arranged to be symmetrical to the first group with respect to the tracking direction; and the suspension wires of the first group are arranged so as to move in a longitudinal direction.

According to another aspect of the invention, the optical pickup actuator may further comprise a base on which a plurality of magnetic members are mounted, a first holder coupled with the base and comprising first through holes through which the suspension wires of the first group are threaded; and a first PCB coupled with one of the ends of the suspension wires of the first group, separate from the first holder, and arranged so that the suspension wires of the first group move.

According to another aspect of the invention, the optical pickup actuator further includes a central PCB coupled with the base and electrically connected to the first PCB by a flexible cable.

According to another aspect of the invention, the diameter of each of the through holes is greater than the diameter of each of the suspension wires of the first group; and through holes are filled in by a damping material.

According to another aspect of the invention, the optical pickup actuator may further include a second holder coupled with the base and comprising second through holes through which the suspension wires of the second group are threaded; and a second PCB fixed to the second holder, coupled with one of the ends of the suspension wires of the second group, and electrically connected with the central PCB.

Additional aspects and/or advantages of the invention will be set forth in part in the description which follows and, in part, will be obvious from the description, or may be learned by practice of the invention.

### Advantageous Effects

According to aspects of the present invention, several advantages can be obtained. First, the optical pickup actuator may drive in four axes, which can minimize offset of the focus direction F in a tangential tilt driving. Second, the optical pickup actuator can be driven in four stable axes, in which a nonlinear movement does not occur, by arranging suspension wires in a tracking direction. In addition, since the driving strength at tangential tilt diving is similar to that of focus driving, track driving, and radial tilt driving, the optical pickup actuator can be driven stably four axes using electromagnetic forces having similar levels.

Third, a plurality of suspension wires can be substantially coplanar with the tracking direction T while symmetrically arranged around an objective lens in a tangential direction. Thus, the displacement of each driving direction of the four axes can be greatly increased. Accordingly, the optical pickup actuator driving in four axes can accommodate various optical media. Fourth, a plurality of suspension wires are divided to a first group arranged on one side of an objective lens, and a second group arranged to be symmetrical with respect to the first group in a tracking direction. The first group can move in a longitudinal direction. Thus, the displacement of each driving direction of the four axes can be greatly increased, and the optical pickup actuator can accommodate various optical media. In addition, the accessibility of an optical pickup can be improved with respect to an inner circumference of an optical media. Fifth, the optical pickup actuator can drive in four axes, which satisfies properties of various optical media and can operate stable radial tilt driving and tangential tilt driving as well as a focus driving and a track driving.

### Description of Drawings

These and/or other aspects and advantages of the invention will become apparent and more readily appreciated from the following description of the embodiments, taken in conjunction with the accompanying drawings of which:

FIG. 1 is a perspective view of an optical recording reproducing apparatus according to an embodiment of the present invention;

FIGS. 2A and 2B are a perspective view and a plane view of an optical pickup actuator according to an embodiment of the present invention, respectively;

FIG. 3 is a perspective view of the optical pickup actuator of FIG. 2A, according to an embodiment of the present invention;

FIG. 4 is a perspective view of the arrangement of coils of the optical pickup actuator of FIG. 2A, according to an embodiment of the present invention;

FIG. 5 is a view of the arrangement of a magnetic member and coils of the optical pickup actuator of FIG. 2A for generating a electromagnetic force, according to an embodiment of the present invention;

FIG. 6 is a perspective view illustrating a magnetic circuit generating an electromagnetic force for driving a blade, according to an embodiment of the present invention;

FIGS. 7A and 7B illustrate focus driving and radial driving, according to embodiments of present invention;

FIGS. 8A and 8B illustrate track driving, according to embodiments of the present invention;

FIGS. 9A and 9B illustrate tangential tilt driving, according to embodiments of the present invention;

FIGS. 10A through 10D illustrate focus driving, track driving, radial tilt driving and tangential tilt driving of the optical pickup actuator of FIG. 2A, respectively, according to embodiments of the present invention;

FIG. 11 is a plane view illustrating an optical pickup actuator according to another embodiment of the present invention;

FIG. 12A is a plane view illustrating an optical pickup actuator according to another embodiment of the present invention;

FIG. 12B is a front view illustrating the optical pickup actuator of FIG. 12A, according to an embodiment of the present invention;

FIG. 13A is a front view illustrating a nonlinear property of a suspension wire arranged in a focus direction;

FIG. 13B is a graph of frequency property of a suspension wire arranged in a focus direction; and

FIG. 13C illustrates a limitation of a displacement of a suspension wire arranged in a focus direction.

### Best Mode

Reference will now be made in detail to the present embodiments of the present invention, examples of which are illustrated in the accompanying drawings, wherein like reference numerals refer to the like elements throughout. The embodiments are described below in order to explain the present invention by referring to the figures.

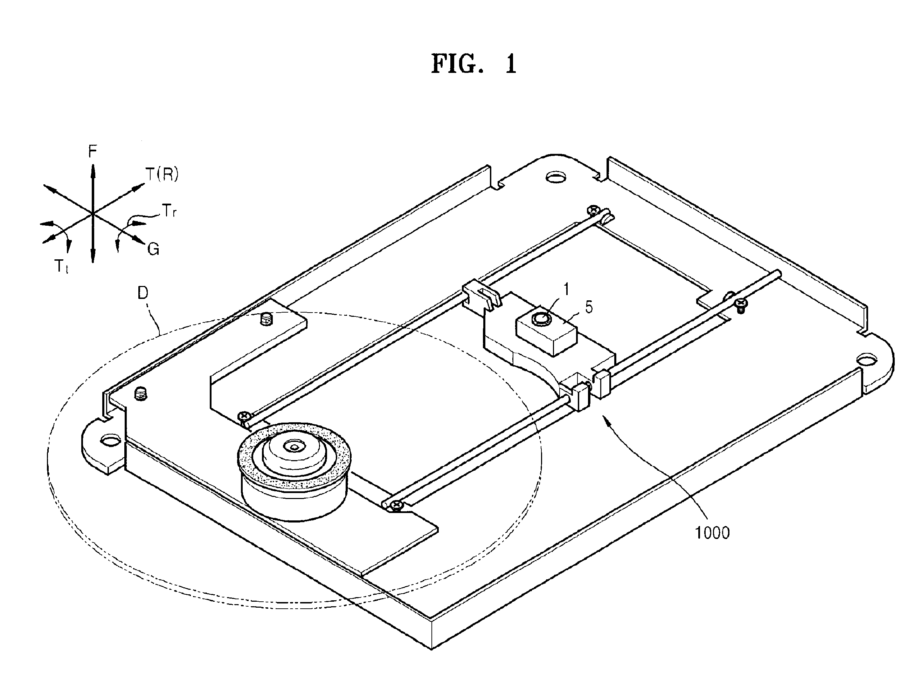

FIG. 1 is a perspective view of an optical recording reproducing apparatus according to an embodiment of the present invention. An optical pickup 5 slides in a radial direction R of an optical medium D. The optical pickup 5 irradiates light on the optical media D through an objective lens 1 and records information on the optical medium D or reads the recorded information from the optical medium D. The optical pickup 5 is driven in a focusing direction F, a tracking direction T, a radial tilt direction Tr, and a tangential tilt direction Tt such that light is accurately incident on a desired position on the optical media D. The tracking direction T is the radial direction R of the optical media D. An optical pickup actuator 1000 is used to drive the optical pickup 5.

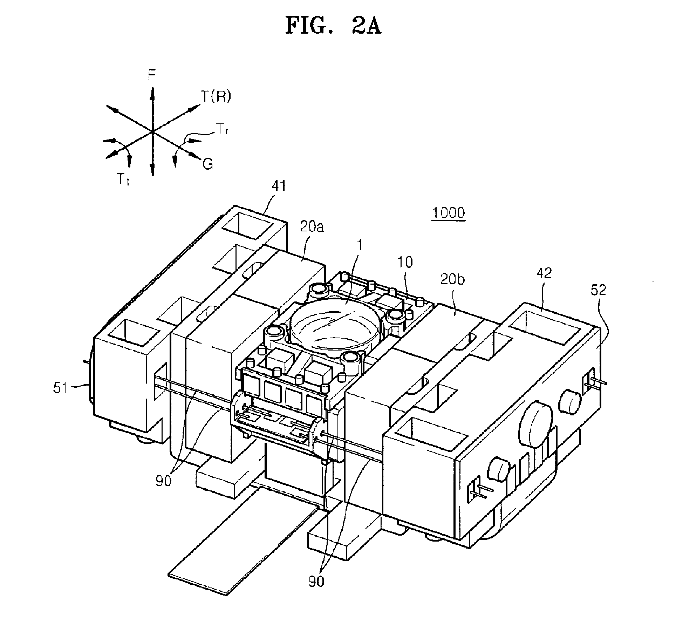

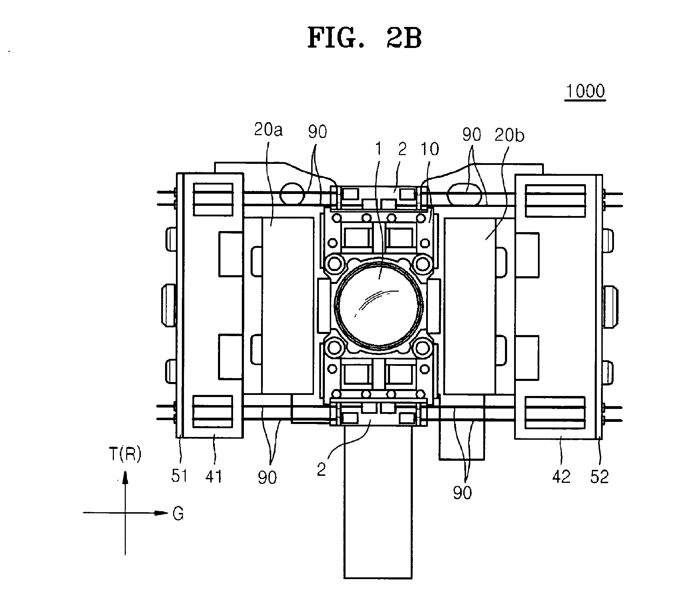

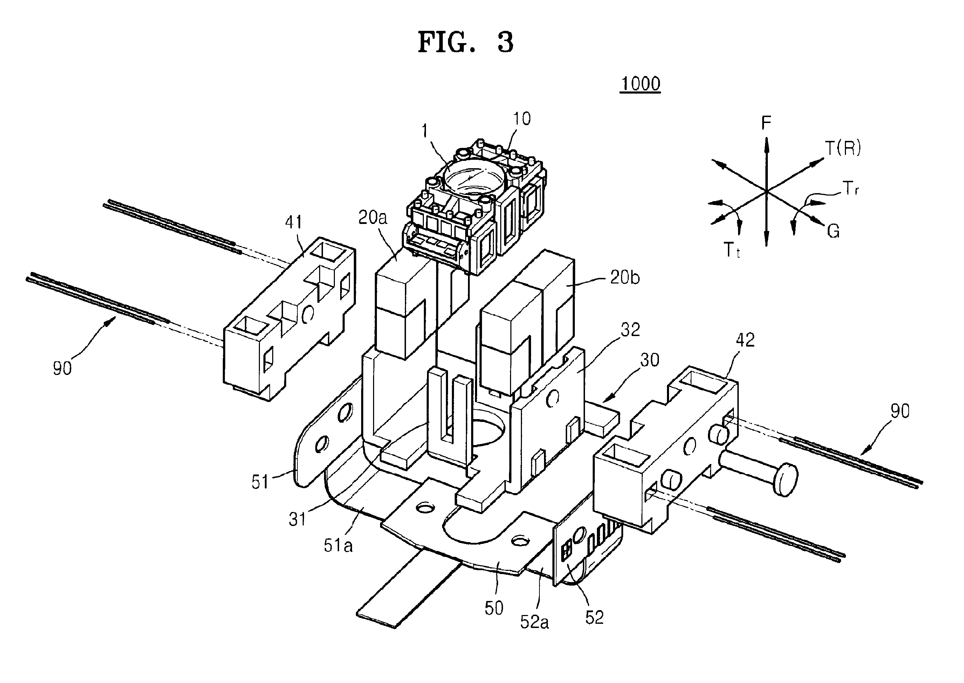

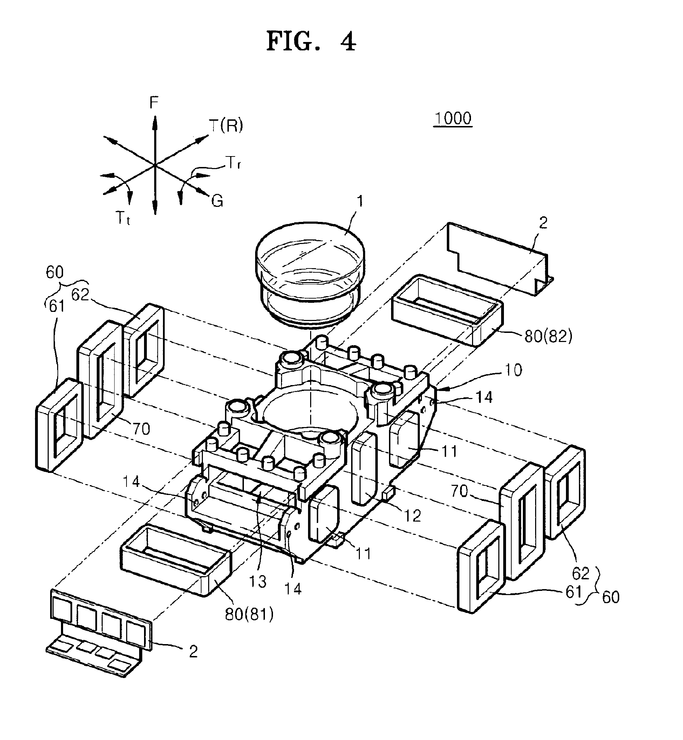

FIGS. 2A and 2B are a perspective view and a plane view illustrating the optical pickup actuator 1000 according to an embodiment of the present invention, respectively. FIG. 3 is a perspective view of the optical pickup actuator 1000. FIG. 4 is a perspective view of the arrangement of coils of the optical pickup actuator 1000. The structure of the optical pickup actuator 1000 according to the current embodiment of the present invention will be described with reference to FIGS. 2A, 2B, 3, and 4.

Turning to FIG. 4, an objective lens 1 is mounted on a blade 10. The objective lens 1 concentrates light emitted from a light source (not shown) onto a recording surface of the optical medium D (e.g., a CD, a DVD, a BD, etc.) First, second, and third coils 60, 70, and 80 are mounted on the blade 10. The first coils 60 are used for focus driving and radial tilt driving. The first coils 60 constitute a pair of first coils 61 and 62 and are arranged on both sides of the blade 10 in a tangential direction G. The second coils 70 are used for tracking driving and are arranged on both sides of the blade 10 in the tangential direction G of the blade 10. Each of the second coils 70 is arranged between the pair of first coils 61 and 62. Third coils 80 are used for tangential tilt driving and are arranged on both sides of the blade 10 in a tracking direction T of the blade 10. Guide units 11 and 12 to guide the first and second coils 60 and 70 are placed on both sides of the blade 10 in the tangential direction G of the blade 10. Guide units 13 to guide the third coils 80 are placed on both sides of the blade 10 in the tracking direction T of the blade 10.

Returning to FIGS. 2A and 2B, one end of each of a plurality of suspension wires 90 is fixed to printed circuit boards (PCBs) 2 mounted on the blade 10. The other end of each of the suspension wires is fixed to one of first and second PCBs 51 and 52. Holes 14 (shown in FIG. 4) through which the suspension wires 90 pass are formed in the blade 10. The blade 10 is flexibly supported with respect to a base 30 (shown in FIG. 3) by the suspension wires 90. The PCBs 2 are electrically connected to the first, second, and third coils 60, 70, and 80. The first and second PCBs 51 and 52 are electrically connected to a central PCB 50 by first and second connecting members 51a and 52a. The suspension wires 90 may also function as an electrical path to supply electricity to the first, second, and third coils 60, 70, and 80. First and second holders 41 and 42 are coupled to the base 30 and support the suspension wires 90. The first and second PCBs 51 and 52 are coupled with the first and second holders 41 and 42, respectively. Eight suspension wires 90 may be used for focus driving, track driving, tangential tilt driving, and radial tilt driving. The suspension wires 90 are symmetrically arranged around the objective lens 1 in both the tracking direction T and the tangential direction G.

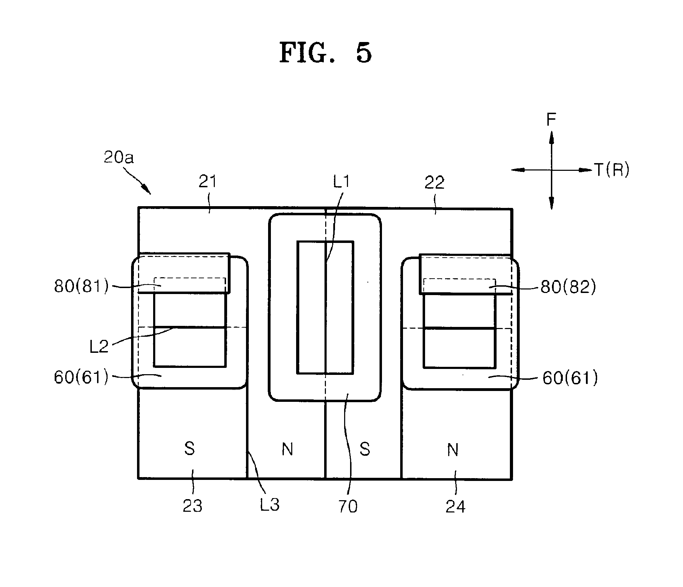

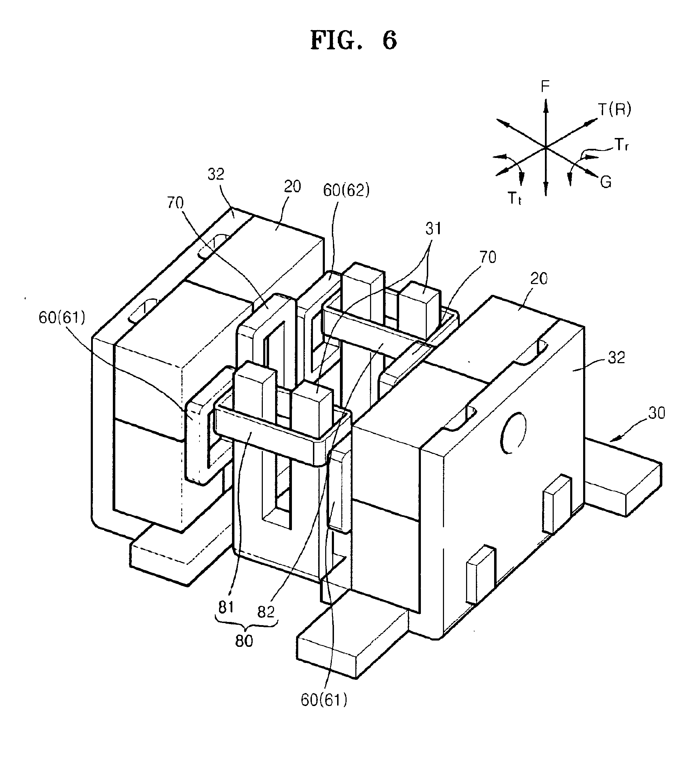

A pair of magnetic members 20a and 20b is mounted on the base 30. The blade 10 is arranged between the pair of magnetic members 20a and 20b. The pair of magnetic members 20a and 20b are arranged to face each other in the tangential direction G. FIG. 5 illustrates an arrangement of a magnetic member 20a and first, second, and third coils 60, 70, and 80, according to an embodiment of the present invention. FIG. 6 is a perspective view illustrating a magnetic circuit generating an electromagnetic force to drive the blade 10, according to an embodiment of the present invention.

Referring to FIG. 5, the magnetic member 20a is polarized into four magnetic poles 21, 22, 23, and 24. Individual magnets may be manufactured so as to polarize the separated magnetic poles 21, 22, 23, and 24, respectively, and then may be combined to form the magnetic member 20a. A first boundary line L1 dividing the second coils 70 in a tracking direction T is placed between the first and second poles 21 and 22. A third boundary line L3 and a second boundary line L2 dividing the first coils 60 in a focus direction F are placed between a third magnetic pole 23 and the first poles 21 so that the third magnetic pole 23 faces the first magnetic pole 21. The fourth magnetic pole 24 and the third magnetic pole 23 are symmetrically arranged such that the fourth magnetic pole 24 faces the second magnetic pole 22. The polarities of the first and second poles 21 and 22 are different, and the polarities of the third and fourth magnetic poles 23 and 24 are different from the polarities of the first and second poles 21 and 22, respectively. Hereinafter, the case where the first and fourth magnetic poles 21 and 24 are N poles and the second and third poles 22 and 23 are S poles will be described; however, according to other aspects of the invention these polarities may be reversed. The magnetic member 20b is arranged similarly.

Refening to FIG. 6, a pair of external yokes 32 is arranged on rear surfaces of the pair of magnetic members 20a and 20b. Internal yokes 31 pass through the third coil 80. The pair of external yokes 32 supports the pair of magnetic members 20a and 20b, functions as composing a closed magnetic circuit, and maximizes an electromagnetic force to drive the blade 10. The internal yokes 31 improve sensitivity of tangential tilt driving by concentrating a magnetic vector generated from the magnetic members 20a and 20b on the third coil 80. The external yokes 32 and the internal yokes 31 may be integrally formed with the base 30, but the present invention is not limited thereto: according to other aspects of the invention, the external yokes 32 and the internal yokes 31 may be formed separately from the base 30.

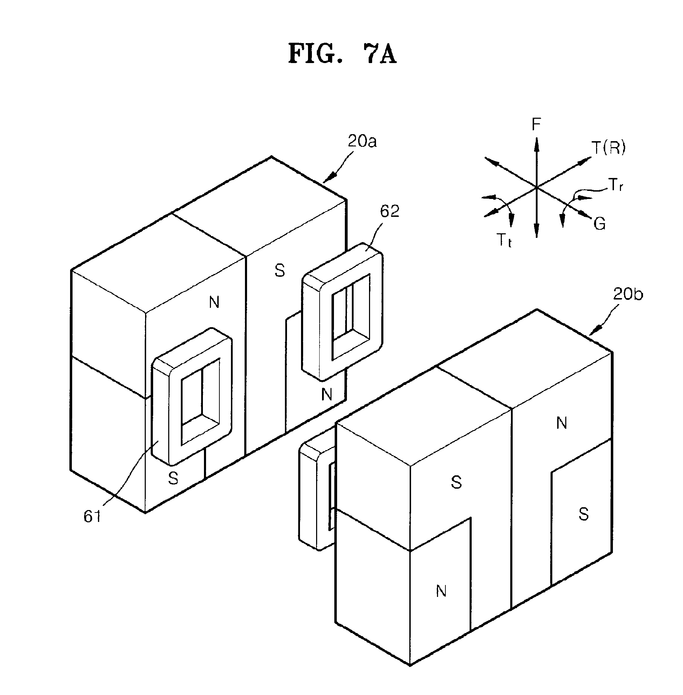

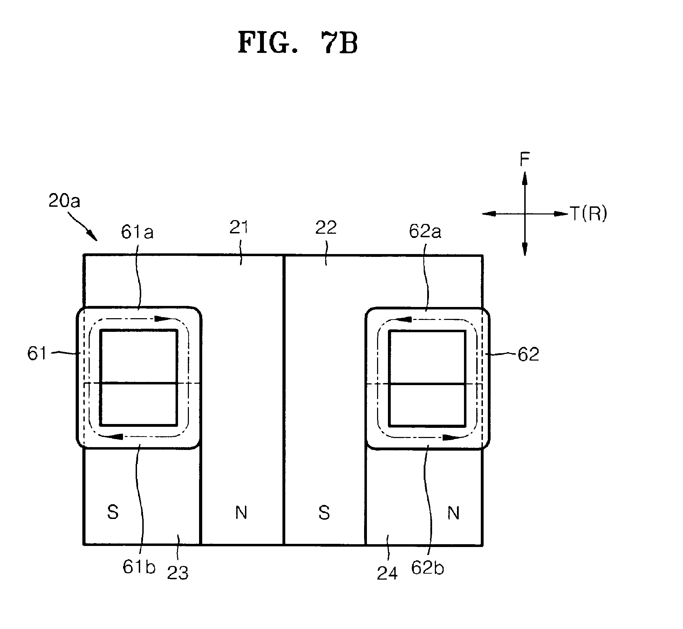

Focus driving, track driving, radial tilt driving and tangential tilt driving will be described with reference to FIGS. 7A-9A and FIGS. 7B-9B. The focus driving and the radial tilt driving will be described with respect to FIGS. 7A and 7B. The pair of first coils 61 and 62 and the first through fourth magnetic poles 21, 22, 23, and 24 are used for the focus driving. When a current flows through the first coil 61 as illustrated in FIG. 7B, parts 61a and 61 b of the first coil 61 generate an electromagnetic force. Parts 62a and 62b of the first coil 62 also generate an electromagnetic force. Currents flow through the first coil 61 and the first coil 62 in opposite directions to each other. An electromagnetic force having a direction of -F is generated in the first coils 61 and 62. If both directions of the currents flowing through the first coil 61 and the first coil 62 change, an electromagnetic force having a direction of +F is generated in the first coils 61 and 62. The focus driving of the blade 10 in the focus direction F is realized by the flowing of currents having identical intensities through the first coils 61 and 62.

For the radial tilt driving, current having different intensities flow through the first coils 61 and 62. and electromagnetic forces having different intensities are generated in the first coils 61 and 62. Thus, the blade 10 is inclined. Accordingly, the radial tilt driving is realized.

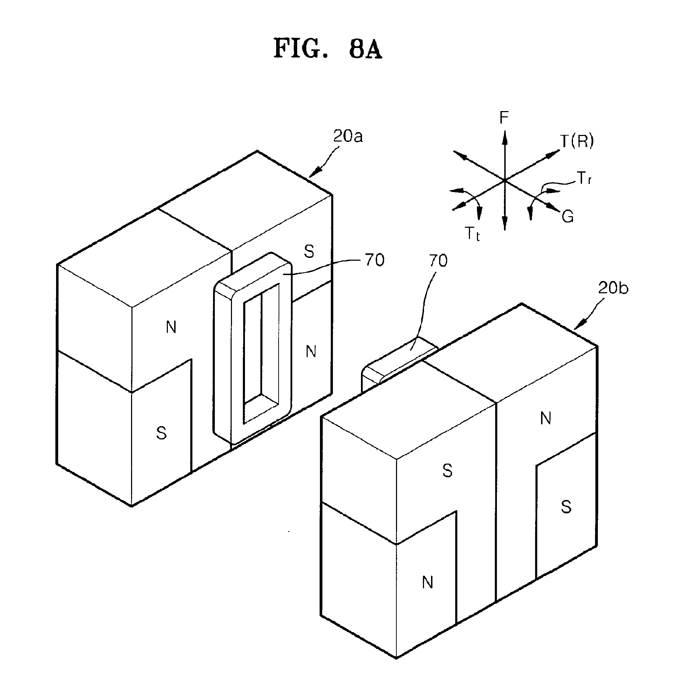

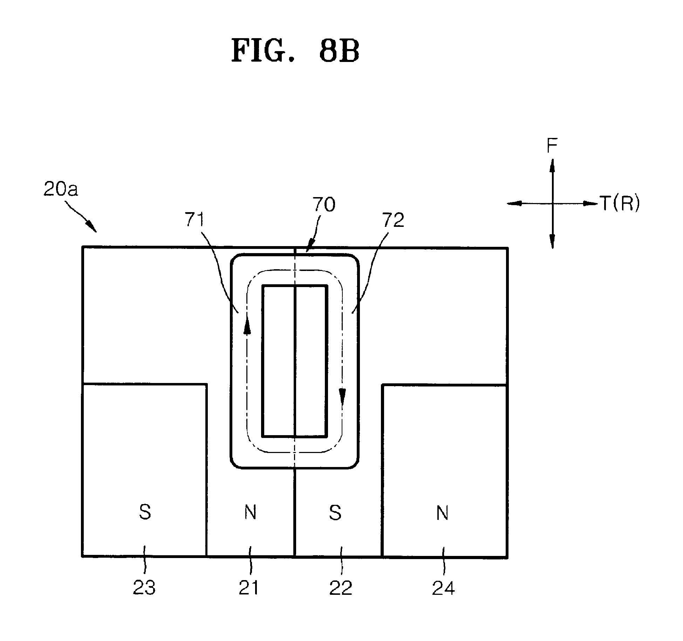

The track driving will be described with reference to FIGS. 8A and 8B. The first and second poles 21 and 22 and the second coils 70 are used for the track driving. When current flows through the second coils 70 as illustrated in FIG. 8B, parts 71 and 72 of the second coils 70 generate an electromagnetic force. An electromagnetic force having a direction of +T is generated in the second coils 70. When the direction of the current flowing through the second coils 70 changes, an electromagnetic force having a direction of -T is generated in the second coils 70. The track driving of the blade 10 in a tracking direction T is realized by changing the direction of the current flowing through the second coils 70.

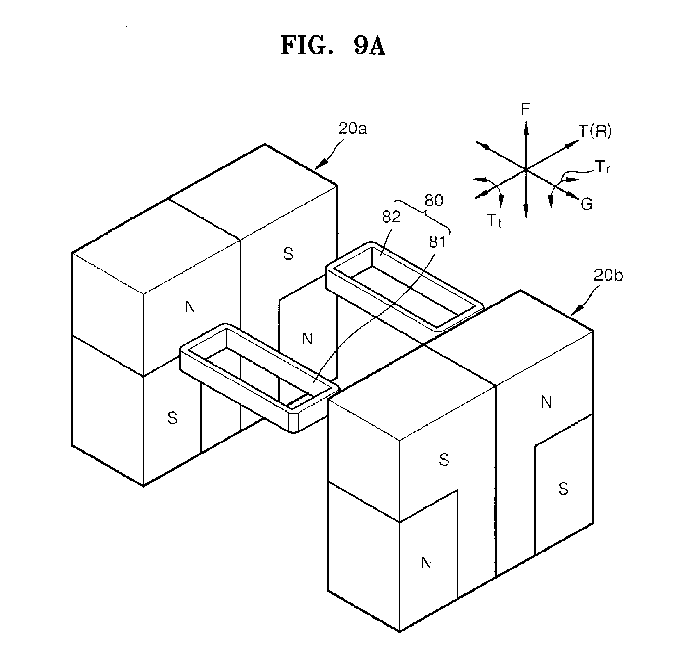

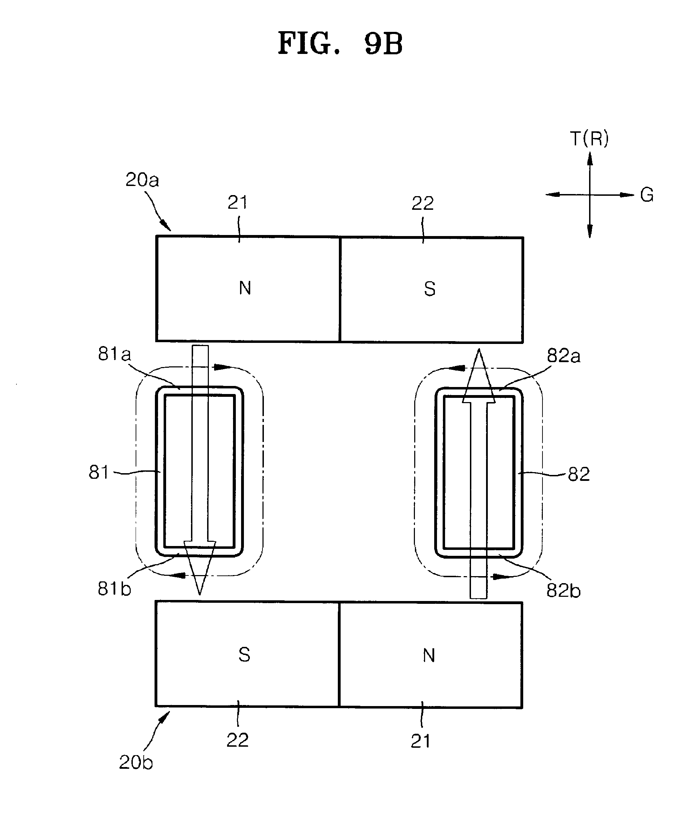

The tangential tilt driving will be described with reference to FIGS. 9A and 9B. The pair of third coils 81 and 82 and the first and second poles 21 and 22 are used for the tangential tilt driving. When a current flows through the third coil 81 as illustrated in FIG. 9B, parts 81a and 81b of the third coil 81 generate an electromagnetic force. In addition, parts 82a and 82b of the third coil 82 also generate an electromagnetic force. An electromagnetic force having a direction of -F is generated in the part 81a of the third coil 81 and the part 82a of the third coil 82, and an electromagnetic force having a direction of +F is generated in the part 81b of the third coil 81 and the part 82b of the third coil 82. Since the sum of electromagnetic force having a focus direction F is '0', the blade 10 does not move in the focus direction F. Instead, the blade 10 is inclined in a direction of -Tt centering around the objective lens 1. When both directions of the current flowing through the third coils 81 and 82 are changed, the blade 10 is inclined in a direction of +Tt.

According to aspects of the present invention, an optical pickup actuator can be realized that can be driven in four axes: in the focus direction, the track direction, the radial tilt direction, and the tangential tilt direction. In the tangential tilt driving, since the center of rotation of the blade 10 is positioned on a vertically lower part, offset of the focus direction F can be minimized.

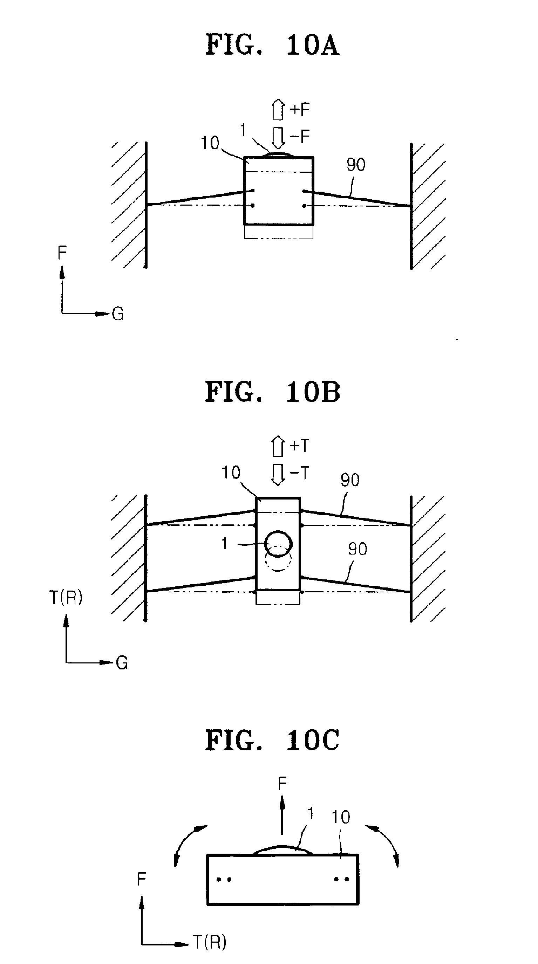

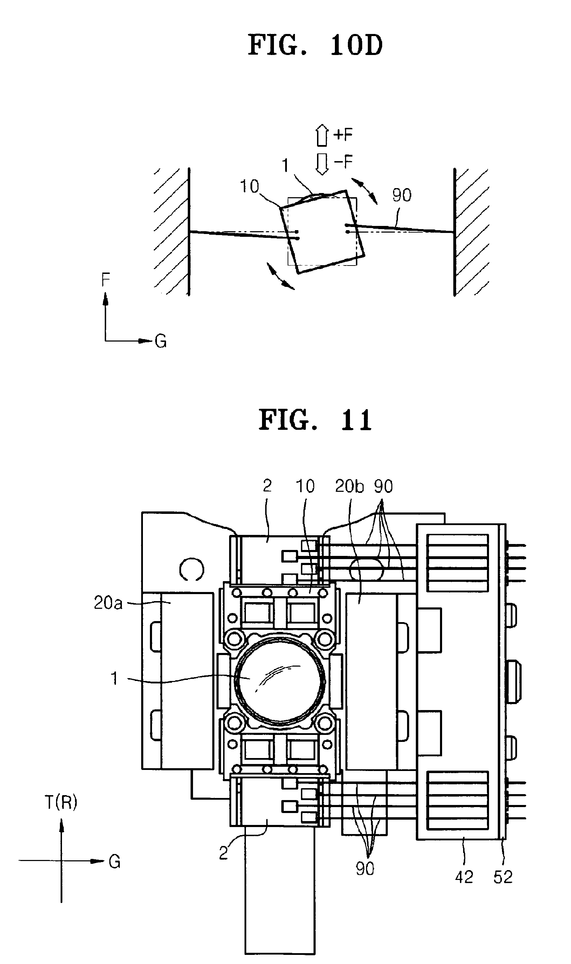

In order to drive the optical actuator 1000 in four axes more stably, the plurality of suspension wires 90 in the optical pickup actuator 1000 are arranged in the tracking direction T (i.e., in the plane of the tracking and tangential directions while spaced apart in the tangential direction) as illustrated in FIGS. 2A and 2B. FIGS. 10A through 10D illustrate operations of the plurality of suspension wires 90 in focus driving, track driving, radial tilt driving, and tangential tilt driving, according to an embodiment of the present invention. Since the nonlinear movement shown in FIG. 13A does not occur, the optical pickup actuator 1000 can be driven stably in four axes. In addition, driving strength at the tangential tilt diving is lowered, and the driving strength at the tangential tilt diving is similar to that of each of the focus driving, the track driving, and the radial tilt driving. Thus, the optical pickup actuator can operate in four axes stably using electromagnetic forces having similar levels.

In order to accommodate various optical media (e.g., CD, DVD, BD, etc.), displacements of the focus direction F, the tracking direction T, the radial tilt direction Tr, and the tangential tilt direction Tt should be increased. To achieve this, the plurality of suspension wires 90 are both arranged in the tracking direction T and are symmetrically arranged around the objective lens 1 in the tangential direction G. Since there is no tension in the plurality of suspension wires 90 in a longitudinal direction, the displacement of each driving direction of the four axes can be greatly increased. Thus, the optical pickup actuator 1000 can be used in various optical media (e.g., CD, DVD, BD, etc.)

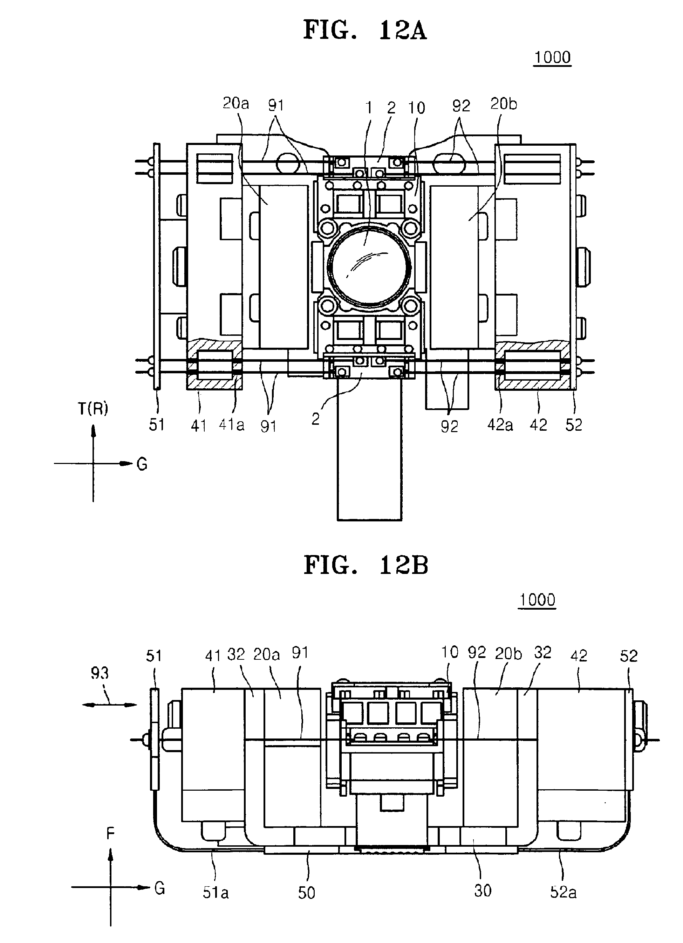

FIGS. 12A and 12B illustrate optical pickup actuators that can increase the displacements of the focus direction F, the tracking direction T, the radial tilt direction Tr and the tangential tilt direction Tt, according to embodiments of the present invention. Referring to FIGS. 12A and 12B, just a supporting structure of the plurality of suspension wires 90 is emphasized. The arrangement of the magnetic members 20a and 20b and first, second, and third coils 60, 70, and 80 is the same as that of FIG. 2A. The plurality of suspension wires 90 are in the plane of the tracking direction T symmetrically arranged around the objective lens 1 in the tangential direction G. The plurality of suspension wires 90 include the suspension wires 90 of a first group 91 arranged on one side of the objective lens 1 and the suspension wires 90 of a second group 92 arranged on an opposite side of the objective lens 1. The suspension wires 90 of the first group 91 are arranged so as to move in a longitudinal direction illustrated as an arrow 93 of FIG. 12B.

One end of each of the suspension wires 90 of the first group 91 goes through a first through hole 41a of a first holder 41 to be connected to a first PCB 51. At this time, the first holder 41 and the first PCB 51 are spaced apart from each other. The other end of each of the suspension wires 90 of the first group 91 is connected to a PCB 2 placed on the blade 10. The diameter of the first through hole 41a may be greater than that of each of the suspension wires 90 of the first group 91. According to such structure, the one end of the suspension wires 90 of the first group 91 is guided by the first through hole 41a and can move in a longitudinal direction 93. A damping material may fill in the first through hole 41a, but need not in all aspects. The damping material applies frictional resistance to the suspension wires 90 of the first group 91 so that the suspension wires 90 of the first group 91 do not move in a longitudinal direction suddenly. Thus, nonlinear movement is removed and stable driving is realized. The damping material may be, for example, silicon oil or ductile silicon resin, though any damping material may be employed.

One end of each of the suspension wires 90 of the second group 92 goes through a second through hole 42a of a second holder 42 coupled with the base 30 and connects to a second PCB 52. The second PCB 52 is fixed in the second holder 42. The other end of each of the suspension wires 90 of the second group 92 is coupled with the PCB 2. The size of the second through hole 42a may be similar to the size of the first through hole 41a. The second through hole 42a may also be filled with the damping material.

First and second connecting members 51a and 52a electrically connect a central PCB 50 coupled with the base 30 to the first and second PCBs 51 and 52, respectively. At least the first connecting member 51a may be formed of a flexible material so that the suspension wires 90 of the first group 91 may move in a longitudinal direction 93. For example, the first connecting member 51a may be formed of a flexible printed circuit (FPC) cable.

According to aspects of the present invention, since there is no tension in the suspension wires 90 of the first group 91 in a longitudinal direction 93, the displacement of each driving direction of the four axes can be greatly increased. Thus, the optical pickup actuator driving in four axes can accommodate various optical media. In addition, the length of the tracking direction T of the optical pickup 5 can be reduced compared with the embodiment of FIG. 11. Accordingly, the accessibility of the optical pickup 5 can be improved with respect to an inner circumference of the optical media D.

Although a few embodiments of the present invention have been shown and described, it would be appreciated by those skilled in the art that changes may be made in this embodiment without departing from the scope of the invention, the scope of which is defined in the appended claims.

### Industrial Applicability

The present invention is applicable to an optical pickup actuator and, especially to an optical pickup actuator driving in four axes.

## Claims

1. An optical pickup actuator (1000) to be driven in a focus direction (F), a track direction (T(R)), a radial tilt direction (Tr), and a tangential tilt direction (Tt), the optical pickup actuator (1000) comprising:
a blade (10) on which an objective lens (1) is mounted;
a plurality of suspension wires (91, 92) coupled to the blade (10) and arranged in a tracking direction (T(R)) and coplanar with a plane defined by the tracking direction (T(R)) and a tangential direction (G) so as to allow the blade (10) to move flexibly;
magnetic members (20a, 20b) facing each other in a tangential direction, the blade (10) being disposed between the magnetic members using the suspension wires (91, 92) **characterized by** : first coils (61, 62) arranged in pairs on corresponding opposite sides of the blade in the tangential direction to drive the blade in the focus direction and in the radial tilt direction;
a pair of second coils (70) arranged on opposite sides of the blade in the tangential direction to drive the blade in the track direction;
a pair of third coils (81, 82) arranged on opposite sides of the blade in the tracking direction to drive the blade in the tangential tilt direction; and
wherein the optical pickup actuator is selectively operable in four axes according to an interaction between the magnetic members and the first through third coils.

2. The optical pickup actuator (1000) of claim 1, wherein each of the second coils (70) are arranged between the corresponding part of first coils (61, 62).

3. The optical pickup actuator (1000) of claim 2, wherein the magnetic member comprises:
a first pole and a second pole separated by a first boundary line dividing the second coils (70) in the tracking direction, wherein the first and second poles have different polarities;
a third pole facing the first pole, disposed between a second boundary line dividing the first coils (61, 62) in a focus direction and a third boundary line between the first and second coils, and having a polarity different from the polarity of the first pole; and
a fourth pole arranged to be symmetrical with the third pole and facing the second pole and having a polarity different from the polarity of the second pole.

4. The optical pickup actuator (1000) of one of claims 1 to 3, further comprising:
an internal yoke going through the third coils.

5. The optical pickup actuator (1000) of one of claims 1 to 4, further comprising:
a plurality of external yokes facing each other;
wherein the magnetic members are arranged between the external yokes.

6. The optical pickup actuator (1000) of any preceding claims, wherein the plurality of suspension wires (91, 92) are symmetrically arranged around the objective lens (1) in the tangential direction (G).

7. The optical pickup actuator (1000) of any preceding claim, wherein the plurality of suspension wires are arranged on one side of the objective lens.

8. The optical pickup actuator of claim 6, wherein:
the plurality of suspension wires (91, 92) comprises a first group (91) arranged in the tangential direction (G) around the objective lens (1), and a second group (92) arranged to be symmetrical to the first group with respect to the tracking direction (T(R)); and
the suspension wires (91) of the first group are arranged so as to move in a longitudinal direction.

9. The optical pickup actuator of claim 8, further comprising:
a base on which the magnetic member is mounted;
a first holder (41) coupled with the base (30) and comprising first through holes (41 a) through which the suspension (91) wires of the first group are threaded; and
a first printed circuit board (51 a) (PCB) coupled with one end of the suspension wires of the first group and separate from the first holder (41) so that the suspension wires (91) of the first group are able to move.

10. The optical pickup actuator of claim 9, further comprising:
a central PCB coupled with the base and electrically connected to the first PCB by a flexible cable.

11. The optical pickup actuator of claim 9, wherein:
the diameter of each of the through holes (41 a) is greater than the diameter of each of the suspension wires (91) of the first group; and
the through holes are filled by a damping material.

12. The optical pickup actuator of claim 10, further comprising:
a second holder (42) coupled with the base (30) and comprising second through holes (42a) through which the suspension wires (92) of the second group are threaded; and
a second PCB (52) coupled to the second holder (42) and to one end of each of the suspension wires (92) of the second group, electrically connected with the central PCB.

13. A method of driving an optical pickup actuator as claimed in any of claims 1 to 12, the method comprising:
applying current of varying direction and intensity to one of a first pair of coils arranged on two sides of the blade in a tangential direction, a second pair of coils arranged on two sides of the blade in the tangential direction, and a third pair of coils arranged on two sides of the blade in a tracking direction; and
selectively driving the blade in one of a focus direction, a tangential tilt direction, the tracking direction, and a radial tilt direction in reaction to the application of the current.

14. The method of claim 13, wherein:
the applying of the current comprises applying a first current to one of the first pair of coils and applying a second current having a direction opposite the first current to the other of the first pair of coils, and intensities of the first current and the second current are same to drive the blade in the focus direction and are different to drive
the blade in the radial tilt direction ;
the applying of the current comprises applying the current to the second pair of coils to drive the blade in the tracking direction; and
the applying of the current comprises applying the current to the third pair of coils to drive the blade in the tangential tilt direction.

## Patentansprüche

1. Stellglied (1000) eines optischen Lesekopfs zur Ansteuerung in einer Fokusrichtung (F), einer Spurrichtung (T(R)), einer Radialneigungsrichtung (Tr) und einer Tangentialneigungsrichtung (Tt), wobei das Stellglied (1000) eines optischen Lesekopfs Folgendes umfasst:
eine Klinge (10), auf der eine Objektivlinse (1) angebracht wird;
mehrere Aufhängungsdrähte (91, 92), die mit der Klinge (10) gekoppelt und in einer Tracking-Richtung (T(R)) angeordnet und mit einer durch die Tracking-Richtung (T(R)) und einer Tangentialrichtung (G) definierten Ebene koplanar sind, um so der Klinge (10) zu ermöglichen, sich flexibel zu bewegen;
magnetische Glieder (20a, 20b), die einander in einer Tangentialrichtung zugewandt sind, wobei die Klinge (10) zwischen den magnetischen Gliedern unter Verwendung der Aufhängungsdrähte (91, 92) angeordnet ist, **gekennzeichnet durch** erste Spulen (61, 62), die in Paaren auf entsprechenden gegenüberliegenden Seiten der Klinge in der Tangentialrichtung angeordnet sind,
um die Klinge in der Fokusrichtung und in der Radialneigungsrichtung anzusteuern;
ein Paar zweiter Spulen (70), die auf gegenüberliegenden Seiten der Klinge in der Tangentialrichtung angeordnet sind, um die Klinge in der Spurrichtung anzusteuern;
ein Paar dritter Spulen (81, 82), die auf gegenüberliegenden Seiten der Klinge in der Tracking-Richtung angeordnet sind, um die Klinge in der Tangentialneigungsrichtung anzusteuern; und
wobei das Stellglied eines optischen Lesekopfs selektiv gemäß einer Wechselwirkung zwischen den magnetischen Gliedern und den ersten bis dritten Spulen in vier Achsen betätigbar ist.

2. Stellglied (1000) eines optischen Lesekopfs nach Anspruch 1, wobei jede der zweiten Spulen (70) zwischen dem entsprechenden Teil der ersten Spulen (61, 62) angeordnet ist.

3. Stellglied (1000) eines optischen Lesekopfs nach Anspruch 2, wobei das magnetische Glied Folgendes umfasst: einen ersten Pol und einen zweiten Pol, die durch eine erste Grenzlinie getrennt sind, die die zweiten Spulen (70) in der Tracking-Richtung aufteilt, wobei der erste und zweite Pol verschiedene Polaritäten aufweisen;
einen dem ersten Pol zugewandten dritten Pol, der zwischen einer zweiten Grenzlinie, die die ersten Spulen (61, 62) in einer Fokusrichtung aufteilt, und einer dritten Grenzlinie zwischen den ersten und zweiten Spulen angeordnet ist und eine von der Polarität des ersten Pols verschiedene Polarität aufweist; und
einen vierten Pol, der so ausgelegt ist, dass er mit dem dritten Pol symmetrisch ist und dem zweiten Pol zugewandt ist, und mit einer von der Polarität des zweiten Pols verschiedenen Polarität.

4. Stellglied (1000) eines optischen Lesekopfs nach einem der Ansprüche 1 bis 3, ferner umfassend:
ein internes Joch, das durch die dritten Spulen verläuft.

5. Stellglied (1000) eines optischen Lesekopfs nach einem der Ansprüche 1 bis 4, ferner umfassend:
mehrere einander zugewandte externe Joche;
wobei die magnetischen Glieder zwischen den externen Jochen angeordnet sind.

6. Stellglied (1000) eines optischen Lesekopfs nach einem der vorhergehenden Ansprüche, wobei die mehreren Aufhängungsdrähte (91, 92) symmetrisch in der Tangentialrichtung (G) um die Objektivlinse (1) herum angeordnet sind.

7. Stellglied (1000) eines optischen Lesekopfs nach einem der vorhergehenden Ansprüche, wobei die mehreren Aufhängungsdrähte auf einer Seite der Objektivlinse angeordnet sind.

8. Stellglied (1000) eines optischen Lesekopfs nach Anspruch 6, wobei
die mehreren Aufhängungsdrähte (91, 92) eine erste Gruppe (91), die in der Tangentialrichtung (G) um die Objektivlinse (1) herum angeordnet ist, und eine zweite Gruppe (92), die so angeordnet ist, dass sie mit Bezug auf die Tracking-Richtung (T(R)) symmetrisch zu der ersten Gruppe angeordnet ist; und
die Aufhängungsdrähte (91) der ersten Gruppe so angeordnet sind, dass sie sich in einer Longitudinalrichtung bewegen.

9. Stellglied (1000) eines optischen Lesekopfs nach Anspruch 8, ferner umfassend:
eine Basis, auf der das magnetische Glied angebracht wird;
einen ersten Halter (41), der mit der Basis (30) gekoppelt ist und erste Durchgangslöcher (41a) umfasst, durch die die Aufhängungsdrähte (91) der ersten Gruppe gefädelt werden; und
eine erste Leiterplatte (51a) (PCB), die mit einem Ende der Aufhängungsdrähte der ersten Gruppe gekoppelt und von dem ersten Halter (41) separat ist, so dass sich die Aufhängungsdrähte (91) der ersten Gruppe bewegen können.

10. Stellglied eines optischen Lesekopfs nach Anspruch 9, ferner umfassend:
eine zentrale PCB, die mit der Basis gekoppelt und durch ein flexibles Kabel elektrisch mit der ersten PCB verbunden ist.

11. Stellglied eines optischen Lesekopfs nach Anspruch 9, wobei
der Durchmesser jedes der Durchgangslöcher (41a) größer als der Durchmesser jedes der Aufhängungsdrähte (91) der ersten Gruppe ist; und
die Durchgangslöcher durch ein Dämpfungsmaterial gefüllt werden.

12. Stellglied eines optischen Lesekopfs nach Anspruch 10, ferner umfassend:
einen zweiten Halter (42), der mit der Basis (30) gekoppelt ist und zweite Durchgangslöcher (42a) umfasst, durch die die Aufhängungsdrähte (92) der zweiten Gruppe gefädelt werden; und
eine zweite PCB (52), die mit dem zweiten Halter (42) und einem Ende jedes der Aufhängungsdrähte (92) der zweiten Gruppe gekoppelt ist, die elektrisch mit der zentralen PCB verbunden ist.

13. Verfahren zum Ansteuern eines Stellglieds eines optischen Lesekopfs nach einem der Ansprüche 1 bis 12, mit den folgenden Schritten:
Anlegen von Strom variierender Richtung und Intensität an eine eines ersten Paars von Spulen, die in einer Tangentialrichtung auf zwei Seiten der Klinge angeordnet sind, eines zweiten Paars von Spulen, die in der Tangentialrichtung auf zwei Seiten der Klinge angeordnet sind, und eines dritten Paars von Spulen, die in einer Tracking-Richtung auf zwei Seiten der Klinge angeordnet sind; und
selektives Ansteuern der Klinge in einer Fokusrichtung oder einer Tangentialneigungsrichtung oder der Tracking-Richtung oder einer Radialneigungsrichtung als Reaktion auf das Anlegen des Stroms.

14. Verfahren nach Anspruch 13, wobei das Anlegen des Stroms das Anlegen eines ersten Stroms an eine des ersten Paars von Spulen und Anlegen eines zweiten Stroms mit einer dem ersten Strom entgegengesetzten Richtung an die andere des ersten Paars von Spulen umfasst, wobei Intensitäten des ersten Stroms und des zweiten Stroms gleich sind, um die Klinge in der Fokusrichtung anzusteuern, und verschieden sind, um die Klinge in der Radialneigungsrichtung anzusteuern;
das Anlegen des Stroms Anlegen des Stroms an das zweite Paar von Spulen umfasst, um die Klinge in der Tracking-Richtung anzusteuern; und
das Anlegen des Stroms Anlegen des Stroms an das dritte Paar von Spulen umfasst, um die Klinge in der Tangentialneigungsrichtung anzusteuern.

## Revendications

1. Actionneur de prise de vue optique (1000) destiné à être entraîné dans une direction de mise au point (F), une direction de poursuite (T(R)), une direction de basculement radiale (Tr), et une direction de basculement tangentielle (Tt), l'actionneur de prise de vue optique (1000) comprenant :
une lame (10) sur laquelle est monté un objectif (1) ;
une pluralité de fils de suspension (91, 92) reliés à la lame (10) et agencés dans une direction de poursuite (T(R)) et coplanaires avec un plan défini par la direction de poursuite (T(R)) et une direction tangentielle (G) de façon à permettre à la lame (10) de se déplacer de manière souple ;
des éléments magnétiques (20a, 20b) en face l'un de l'autre dans une direction tangentielle, la lame (10) étant disposée entre les éléments magnétiques au moyen des fils de suspension (91, 92), **caractérisés par** :
des premières bobines (61, 62) agencées par paires sur des côtés opposés correspondants de la lame dans la direction tangentielle afin d'entraîner la lame dans la direction de mise au point et dans la direction de basculement radiale ;
une paire de deuxièmes bobines (70) agencées sur des côtés opposés de la lame dans la direction tangentielle afin d'entraîner la lame dans la direction de poursuite ;
une paire de troisièmes bobines (81, 82) agencées sur des côtés opposés de la lame dans la direction de poursuite afin d'entraîner la lame dans la direction de basculement tangentielle ; et
l'actionneur de prise de vue optique pouvant être sélectivement actionné sur quatre axes en fonction d'une interaction entre les éléments magnétiques et les premières à troisièmes bobines.

2. Actionneur de prise de vue optique (1000) selon la revendication 1, dans lequel chacune des deuxièmes bobines (70) est agencée entre la partie correspondante des premières bobines (61, 62).

3. Actionneur de prise de vue optique (1000) selon la revendication 2, dans lequel l'élément magnétique comprend :
un premier pôle et un deuxième pôle séparés par une première ligne de séparation divisant les deuxièmes bobines (70) dans la direction de poursuite, les premier et deuxième pôles ayant des polarités différentes ;
un troisième pôle tourné vers le premier pôle, disposé entre la deuxième ligne de séparation divisant les premières bobines (61, 62) dans une direction de mise au point et une troisième ligne de séparation entre les premières et deuxièmes bobines, et ayant une polarité différente de la polarité du premier pôle ; et
un quatrième pôle agencé de façon à être le symétrique du troisième pôle et tourné vers le deuxième pôle, et ayant une polarité différente de la polarité du deuxième pôle.

4. Actionneur de prise de vue optique (1000) selon l'une des revendications 1 à 3, comprenant en outre :
une culasse interne passant à travers les troisièmes bobines.

5. Actionneur de prise de vue optique (1000) selon l'une des revendications 1 à 4, comprenant en outre :
une pluralité de culasses externes tournées les unes vers les autres ;
les éléments magnétiques étant agencés entre les culasses externes.

6. Actionneur de prise de vue optique (1000) selon l'une quelconque des revendications précédentes, dans lequel la pluralité de fils de suspension (91, 92) est agencée symétriquement autour de l'objectif (1) dans la direction tangentielle (G).

7. Actionneur de prise de vue optique (1000) selon l'une quelconque des revendications précédentes, dans lequel la pluralité de fils de suspension est agencée sur un côté de l'objectif.

8. Actionneur de prise de vue optique selon la revendication 6, dans lequel :
la pluralité de fils de suspension (91, 92) comprend un premier groupe (91) agencé dans la direction tangentielle (G) autour de l'objectif (1) et un deuxième groupe (92) agencé de façon à être symétrique au premier groupe par rapport à la direction de poursuite (T(R)) ; et
les fils de suspension (91) du premier groupe sont agencés afin de se déplacer dans une direction longitudinale.

9. Actionneur de prise de vue optique selon la revendication 8, comprenant en outre :
un socle sur lequel est monté l'élément magnétique ;
un premier support (41) relié au socle (30) et comprenant des premiers trous traversants (41a) dans lesquels sont enfilés les fils de suspension (91) du premier groupe ; et
une première carte de circuit imprimé (51a) (PCB) reliée à une extrémité des fils de suspension du premier groupe et séparée du premier support (41) de telle manière que les fils de suspension (91) du premier groupe soient capables de se déplacer.

10. Actionneur de prise de vue optique selon la revendication 9, comprenant en outre :
une carte PCB centrale reliée au socle et électriquement connectée à la première carte PCB par un câble souple.

11. Actionneur de prise de vue optique selon la revendication 9, dans lequel :
le diamètre de chacun des trous traversants (41a) est supérieur au diamètre de chacun des fils de suspension (91) du premier groupe ; et
les trous traversants sont remplis d'un matériau d'amortissement.

12. Actionneur de prise de vue optique selon la revendication 10, comprenant en outre :
un deuxième support (42) relié au socle (30) et comprenant des deuxièmes trous traversants (42a) dans lesquels sont enfilés les fils de suspension (92) du deuxième groupe ; et
une deuxième carte PCB (52) reliée au deuxième support (42) et à une extrémité de chacun des fils de suspension (92) du deuxième groupe, électriquement connectée à la carte PCB centrale.

13. Procédé d'entraînement d'un actionneur de prise de vue optique selon l'une quelconque des revendications 1 à 12, le procédé consistant à :
appliquer un courant de sens et d'intensité variables à l'une d'une première paire de bobines agencées des deux côtés de la lame dans une direction tangentielle, d'une deuxième paire de bobines agencées des deux côtés de la lame dans la direction tangentielle, et d'une troisième paire de bobines agencées des deux côtés de la lame dans une direction de poursuite ; et
entraîner sélectivement la lame dans une direction de mise au point, dans une direction de basculement tangentielle, dans la direction de poursuite et dans une direction de basculement radiale en réaction à l'application du courant.

14. Procédé selon la revendication 13, dans lequel :
l'application du courant consiste à appliquer un premier courant à l'une de la première paire de bobines et à appliquer un deuxième courant de sens opposé au premier courant à l'autre de la première paire de bobines, les intensités du premier courant et du deuxième courant étant identiques pour entraîner la lame dans la direction de mise au point et étant différentes pour entraîner la lame dans la direction de basculement radiale ;
l'application du courant consiste à appliquer le courant à la deuxième paire de bobines pour entraîner la lame dans la direction de poursuite, et
l'application du courant consiste à appliquer le courant à la troisième paire de bobines pour entraîner la lame dans la direction de basculement tangentielle.
